# EUROPÄISCHE PATENTSCHRIFT

(11) **EP 0 707 519 B1**
(45) Veröffentlichungstag und Bekanntmachung des Hinweises auf die Patenterteilung: **03.06.1998**
(21) Anmeldenummer: 94920372.3
(22) Anmeldetag: 01.07.1994
(51) Int. Cl.: B01J 20/24

(54) **VERFAHREN ZUR GEWINNUNG VON ADSORPTIONSMATERIAL**
ADSORBENT MATERIAL PRODUCTION PROCESS
PROCEDE DE PRODUCTION DE MATERIAU ABSORBANT

(30) Priorität: 08.07.1993 DE 4322743
(43) Veröffentlichungstag der Anmeldung: 24.04.1996
(73) Patentinhaber: Pohl, Peter, 24242 Felde (DE)
(72) Erfinder: Pohl, Peter, 24242 Felde (DE)
(74) Vertreter: Biehl, Christian, Dipl.-Phys.
(86) Internationale Anmeldenummer: DE9400758
(87) Internationale Veröffentlichungsnummer: WO9501836

(56) Entgegenhaltungen:
- WO-A-90/07468
- DE-A- 4 117 234
- FR-A- 2 223 078
- GB-A- 570 544

## Beschreibung

Die Erfindung betrifft ein Verfahren zur Gewinnung von Adsorptionsmaterial aus Braunalgen und seiner Anwendung zur Adsorption von Schadstoffen, wie z. B. Schwermetallen, Kohlenwasserstoffen und dergleichen aus Abwässern nach dem Oberbegriff des Anspruchs 1.

Gattungsgemäß ist ein derartiges Verfahren aus dem japanischen Patent Abstract JP 1-15 133 A2, C-592, vom 02. Mai 1989, Vol. 13/Nr. 187 bekannt, in der jedoch Edelmetalle, wie z. B. Gold, Silber und Platin mit Hilfe von eingekapselten und ansonsten im wesentlichen unbehandelten Algen gesammelt werden. Anschließend werden diese mit einem speziellen Lösungsmittel (z. B. Mercaptoethanol) herausgelöst. Zur Verkapselung der Alge werden Polymerstoffe, wie z. B. Polyacrylamid und Gelatine verwandt.

Edelmetalle haben jedoch aufgrund ihrer geringen Bindungsfähigkeit ganz andere Adsorptionsfähigkeiten als Schwermetalle oder gar Kohlenwasserstoffe, die erfindungsgemäß herausgelöst werden sollen.

Über die Herstellung des Algenmaterials findet sich in der japanischen Druckschrift keine besondere Lehre.

Weiter ist eine Veröffentlichung in "Biotechnology and Bioengineering" von Kuyucak und Volesky zu nennen, die in Band 33, Seite 823 - 831, 1989 erschienen ist. In diesem Artikel ist bereits die Nutzung der Adsorptionsfähigkeit einer Braunalge Ascophyllum nodosum zur Adsorption des Schwermetalles Kobalt vorgeschlagen worden. Andere Schwermetalle wurden jedoch nicht untersucht. In dieser Veröffentlichung wird sogar ausdrücklich darauf hingewiesen, daß bei Extraktion der Alginate aus dem Adsorptionsmaterial die Kobalt-Aufnahme durch die Biomasse um 91 % sinkt, man dies also vermeiden sollte. Im wesentlichen entspricht also das Verfahren von Kuyucak und Volesky dem der herkömmlichen Alginatproduktion, bei dem zur Zeit Algenmaterial in erheblicher Menge als Reststoff anfällt.

Zudem ist es den auf dem Gebiet arbeitenden Fachleuten bekannt, daß lebende mikroskopische und makroskopische Algen Schwermetalle an ihrer Oberfläche binden und bei längeren Einwirk-Zeiträumen auch zu einem gewissen Teil in sich aufnehmen können. Diese Adsorption von Schwermetallen kann auch von toter (getrockneter oder extrahierter) Biomasse der Algen, wie oben beschrieben, bewirkt werden. Der Erfinder vorliegenden Verfahrens hat festgestellt, daß insbesondere gezüchtete mikroskopische Braunalgen gute Schwermetalladsorptionseigenschaften haben. Ein Nachteil solcher im Labor gezüchteter mikroskopischer Algen ist aber, daß sie wegen der technisch aufwendigen Züchtungs-Apparate (Fermenter) nur sehr kostenintensiv zu erzeugen sind.

Bei der Produktion von Alginaten jedoch fallen große Mengen makroskopischer Braunalgen als preiswertes Abfall-Produkt an.

Aufgabe der Erfindung ist daher, ein Verfahren zur Aufarbeitung und Reinigung sowie der weiteren technischen Verwendung makroskopischer Braunalgen, insbesonderer der Restbiomasse von Braunalgen nach der kommerziellen Herauslösung von Alginaten, zu schaffen.

Hierdurch lassen sich die hohen Kosten der Erzeugung der Biomasse einsparen, wenn man z. B. Laminaria-, Ascophyllum-, Fucus-, Macrocystis- und Nereocystis-Arten verwendet. Diese Algen werden schon jetzt an den Küsten verschiedener Länder in großen Mengen zur Gewinnung von Alginaten gesammelt und unter alkalischen Bedingungen verarbeitet und abgepreßt. Der so gewonnene flüssige Extrakt enthält die Alginate, die z. B. als Quellmittel verwandt werden. Alginate sind Polysaccharide mit saurem Charakter.

Bei der Extraktion durch Pressung nach einem groben Zerkleinern bleiben große Mengen an feuchter und kompakter Restbiomasse übrig, die überwiegend Zellwandmaterial und auch noch erhebliche Mengen intakter, also unbeschädigter Zellen enthält, daneben jedoch auch noch lösliche Stoffe wie Mineralsalze, Proteine, lösliche Polysaccharide, Geruchsstoffe und vieles andere. Diese Biomasse wird zu einem Teil zur Zeit als Düngemittel auf Felder aufgebracht.

Jedoch ist dies nicht ohne Probleme, da sich das Material unter Ausbildung unangenehmer Gerüche zersetzt. Dies geschieht insbesondere auch schon bei der Lagerung.

Trotz der bekannten Eigenschaften der Adsorption kann diese Restbiomasse nicht als Adsorptions- und Filtermaterial zur Reinigung von Abwässern zur Gewinnung von Trinkwasser aus Gebrauchswasser zum Einsatz kommen, da sich die löslichen Stoffe aus dem Material auswaschen, das Material außerdem nur kurzfristig lagerbar ist, bevor es sich zersetzt und dabei zu erheblicher Geruchsbildung führt.

Das im Anspruch 1 vorgeschlagene Verfahren ermöglicht die Lösung der erfindungsgemäßen Aufgabe auf umweltschonendem Wege ohne Verwendung teuerer Chemikalien. In den Unteransprüchen werden vorteilhafte Ausgestaltungen des Verfahrens vorgeschlagen. In enger Beziehung hierzu wird weiter vorgeschlagen, wie das erfindungsgemäß gewonnene Material zur Schadstoffadsorption einsetzbar ist, und wie es einfach durch Regenerierung nach einem Desorptionsvorgang wiederverwendet werden kann.

Das Ausgangsmaterial, das als Abfallprodukt aus der herkömmlichen Alginat-Produktion (z. B. an der Atlantikküste von Frankreich) anfällt, ist im Vergleich zu frisch gesammelten Algen sehr kostengünstig zu erwerben.

Im Verlauf dieses kommerziellen Alginat-Produktionsprozesses werden die Braunalgen bereits zerkleinert und mit Alkalien behandelt. Auf diese Weise werden die (sauren) Alginsäuren der Algen in wasserlösliche Alginate (K- bzw. Na-Alginate) überführt. Diese werden sodann aus den Algen abgepreßt. Es verbleiben aber danach immer noch beträchtliche Restanteile von Alginaten bzw. Alginsäuren, sowie weitere lösliche Bestandteile (Proteine, Lipopolysaccharide, Salze und anderes mehr). Diese machen nach von dem Erfinder gemachten Messungen bis zu 19 % des ausgepreßten Algenmaterials aus. Für das erfindungsgemäße Verfahren wird nun dieses ausgepreßte Algenmaterial weiterverwandt, das ansonsten für die Alginat-Hersteller ein relativ wertloses Abfallprodukt ist, das sich selbst als Düngemittel nur bedingt verwenden läßt.

Vorteilhaft am erfindungsgemäßen Verfahren ist insbesondere die Extraktion, die es erlaubt, aus dem ausgepreßten Algenmaterial noch verbleibende lösliche Stoffe zu entfernen, darunter auch die restlichen Alginate. Hierzu wird das Algenmaterial zunächst noch einmal fein zerkleinert und danach abwechselnd zweimal mit (salzreichem) Seewasser und dann mit (salzarmem) Leitungswasser extrahiert. Durch diese Verfahrensweise werden die Algenzellen mechanisch und insbesondere osmotisch gründlich aufgeschlossen und von den restlichen wasserlöslichen Bestandteilen befreit. Auf diese Weise werden, wie z. Zt. durch Untersuchungen festgestellt ist, aus 100 kg Algenmaterial (Abfallprodukt der Alginatherstellung) ca. 19 kg an löslichen Substanzen entfernt.

Insbesondere trägt die Zerkleinerung der Biomasse auf eine Korngröße von 500 - 1000 µm erheblich dazu bei, daß die Algenzellen vollständig zerstört werden, so daß die Zellwände völlig von ihren löslichen Bestandteilen gereinigt werden können. Die Reinigung zunächst mit Seewasser verbessert die Entfernung der löslichen Bestandteile des Algenmaterials erheblich, da man so verschiedene osmotische Verhältnisse bei den Spülungen nutzt. Zudem befreit das abschließende Spülen mit Süßwasser die Algen von den Salzwasserresten bzw. den dann noch enthaltenen Salzen.

In einer bevorzugten Ausführungsform wird vorgeschlagen, den Süßwasser-Spülgang mit destilliertem Wasser vorzunehmen, so daß man hochreine Biomasse gewinnen kann.

Das nun gewonnene "bzw. gespülte" Algenmaterial besteht praktisch nur noch aus reinen, festen und wasserunlöslichen Algen-Zellwandgerüsten. Diese Zellwandgerüste haben erstaunlicherweise, wie Studien des Erfinders zeigen, ähnlich wie die Alginate, die Fähigkeit, Schwermetall zu binden. Erst durch ein solches festes Adsorptionsmaterial kann aber nun wirtschaftlich sinnvoll die Schadstoff-Eliminierung aus flüssigen Abwässern mit vertretbarem Aufwand technisch beherrschbar eingesetzt werden. Nur mit einem festen Adsorptionsmaterial kann man nach dem Adsorptionsvorgang (dem Mischen mit dem Abwasser) eine wirtschaftlich vertretbare mechanische Trennung der behandelten Abwässer von dem Adsorptionsmaterial durchführen. Mit löslichen Alginaten, deren Schwermetall-Adsorptionsfähigkeit prinzipell bekannt ist, ist jedoch die Schwermetall-Eliminierung aus Abwässern technisch deswegen nicht möglich, weil es einen unvertretbar hohen Aufwand bedeuten würde, diese von den Abwässern zu trennen.

Das erfindungsgemäß aufbereitete Adsorptionsmaterial hat in Versuchen hohe Adsorptionskapazitäten gegenüber Cadmium, Kupfer, Nickel, Blei, Eisen und Zink bewiesen.

Im folgenden wird das verwendete Verfahren anhand von Ausführungsbeispielen näher beschrieben.

Als Ausgangsmaterial dient die nach Gewinnung von Alginaten anfallende Restbiomasse der verschiedenen Algenarten. Diese Biomasse ist noch feucht, nur grob zerkleinert und enthält noch in erheblichen Mengen die o.g. löslichen und nicht löslichen Substanzen. Die Korngröße beträgt zwischen 5 - 10 mm.

Dieses Material wird nun in einem Hochleistungszerkleinerer weiter zerkleinert unter Zusatz der etwa 10-fachen Menge an Seewasser bei normaler Temperatur (ca. 25°C), bis eine Korngröße von 500- 1000 µm erreicht ist. Die Wassermenge hängt dabei von dem Feuchtigkeitsgehalt des Ausgangsmaterials ab. Danach wird die Seewasser-Algenmaterialmischung in ein Rührbecken überführt und dort 10 Minuten gerührt. Anschließend wird die Mischung über einen Separator in einen Flüssigbestandteil und den Feststoffbestandteil getrennt. Der Flüssigbestandteil wird verworfen, da sich in ihm die unerwünschten gelösten Bestandteile, wie z. B. die Geruchsstoffe Salze, Proteine, etc. befinden.

Die gewonnenen Feststoffe werden erneut in einem Rührbecken 10 Minuten unter Zusatz der etwa 10-fachen Menge Seewasser gerührt. Dann wird die Mischung erneut über einen Separator in einen Flüssigbestandteil und den Feststoffbestandteil getrennt. Der Flüssigbestandteil kann nun entweder wiederum verworfen werden oder als wiederverwendbare Extraktionslösung in das Zuerst verwandte Rührbecken eingeleitet werden. Anschließend wird der gewonnene Feststoffbestandteil aus dem zweiten Zentrifugierprozeß in einem Rührbecken mit der etwa 10-fachen Menge an Süßwasser unter weitgehender Entfernung der Seewassersalze wiederum 10 Minuten gerührt und dann wiederum über einen Separator von dem Flüssigbestandteil getrennt.

Die Feststoffe, die jetzt verbleiben, das zerkleinerte und gereinigte Algenmaterial, werden getrocknet und können direkt als Adsorptions- oder Filtermaterial verwendet werden. Eine die vorgenannten Reinigungsschritte durchführende Anlage ist einfach aufzubauen und kann ohne weiteres im Durchlauf kontinuierlich betrieben werden.

Zusätzlich wird noch vorgeschlagen, das Extraktionsmittel bei der Aufbereitung des Algenmaterials auf höhere Temperaturen vorzuwärmen oder das Algenmaterial mit dem Extraktionsmittel zu kochen.

Weiter wird vorgeschlagen, das zerkleinerte und gereinigte Algenmaterial in Alginate einzubetten, so daß es nicht einfach als Pulver in die zu reinigende Flüssigkeit eingegeben wird. Dazu werden die getrockneten oder noch feuchten Feststoffe zu 5 % in einer ca. 6 %-igen wässrigen Lösung von Na-Alginat suspendiert und diese Suspension über geeignete Pipetten in eine 0,2 molare Calciumchloridlösung eingetropft. Dadurch entstehen kleine Partikel aus CaAlginat, in die das Algenmaterial eingebettet ist. Wichtig ist es, daß hierbei das Alginat in Form von wasserunlöslichem Calcium-Alginat vorliegt, während es aus den Algen in Form von wasser-löslichem K- oder Na-Alginat extrahiert wird. Da bei der Herstellung des Adsorptionsmaterials bereits Natrium-Alginat anfällt, bietet sich an, dieses weiter zu verwenden und, wie oben angegeben, in Ca-Alginat umzuwandelt. Dabei dient dieses Ca-Alginat nicht als Adsorptionsmittel, sondern nur als festes Trägermaterial.

Als Trägermaterial würden sich aber auch andere Materialien, z. B. polymere Kunststoffe oder Harze eignen. Wichtig ist nur, das Algenmaterial durch Einbetten in ein Trägermaterial zu verfestigen, also in eine besser abfilterbare Struktur zu überführen. Erfindungsgemäß bevorzugt bilden sich so feste kugelige Partikel aus unlöslichem Calcium-Alginat, in denen die Feststoffe aus dem Algenmaterial eingebettet sind. Dieses "Granulat" ermöglicht vor allem bei Verwendung als Füllmaterial in Patronen eine erhöhte Durchflußgeschwindigkeit der zu behandelnden Lösungen bzw. Abwässer.

Wenn das Material in Form eines feinen Pulvers, nicht als Granulat, vorliegt, würde eine Menge von ca. 1 kg davon 1m³ Abwasser zugesetzt werden müssen, um bei starker Verschmutzung die geforderte Schadstoffreduktion zu erreichen. Nach etwa 10 - 30 minutiger mechanischer Mischung (rühren oder schütteln) kann über einen Separator das geklärte Abwasser vom schadstoffhaltigen Festanteil (Algenmaterial mit adsorbierten Schadstoffen) getrennt werden. Vorteilhafter ist jedoch die Verwendung von Granulat, da ansonsten wegen der Feinheit und Leichtigkeit des Algenpulvers Staubentwicklung auftreten kann. Der Staub des Adsorptionsmaterials ist zwar harmlos (nicht - toxisch), würde aber das Arbeiten erschweren.

Im folgenden soll nun die Anwendung des getrockneten Algenmaterials bzw. des Granulates erläutert werden. Zunächst ist es möglich, das getrocknete Algenmaterial direkt in Lösungen und Abwässer einzugeben. Dazu wird nach der Zuführung des Materials die Mischung je nach Bedarf 10 bis 30 Minuten mechanisch gerührt bzw. geschüttelt. Dabei richten sich selbstverständlich die verwendeten Mengen und Zeiten nach dem Gehalt an Schwermetallen oder auszufilternden organischen Substanzen in den zu behandelnden Abwässern. Die zugegebene Menge liegt bei getrocknetem Algenmaterial als Feststoff zwischen 1 - 2 kg pro m³ zu reinigenden Volumens mit normalem Verschmutzungsgehalt, und bei Granulat bei ca. 10 kg pro m³.

Nach der obigen Rührzeit wird das zugegebene Algenmaterial durch Filtration oder Zentrifugieren aus den nun gereinigten Lösungen oder Abwässern entfernt. Dieses nunmehr mit Schwermetallen belastete Algenmaterial kann regeneriert werden.

Dazu wird das nach der Filtration oder Zentrifugation erhaltene und mit adsorbierten Substanzen beladene Algenmaterial zunächst gesammelt und im Fall, daß Schwermetalle adsorbiert wurden, mit verdünnter Salzsäure behandelt. Dadurch werden die Schwermetalle wieder von dem Algenmaterial desorbiert. Dies kann vorteilhafterweise mit erhöhter Temperatur geschehen. Anschließend kann das so gereinigte Algenmaterial durch Waschen mit Leitungswasser oder mit destilliertem Wasser für besondere Anwendungen, bei denen besondere Reinheit erzielt werden soll, von der Salzsäure befreit werden. Anschließend kann das Algenmaterial erneut zur Adsorption von Schwermetallen benutzt werden.

Falls organische Substanzen an das Algenmaterial angelagert wurden, erfolgt die Desorption durch Behandlung des beladenen Algenmaterials mit organischen Lösungsmitteln.

Die oben bereits erwähnte Möglichkeit, das Algenmaterial bzw. das gewonnene Granulat als Füllmittel für Patronen od. ä. in kontinuierlichen Durchflußverfahren zu betreiben, soll nun abschließend beschrieben werden. Patronen haben den Vorteil, daß sie ein eng definiertes Volumen an Algenmaterial umschließen, das einfach ausgetauscht und mechanisch gehandhabt werden kann. Dabei werden die aus Algenmaterial gewonnenen getrockneten Feststoffe bzw. das Granulat in eine röhrenförmige Hülse oder Patrone eingefüllt und die zu behandelnden Lösungen oder Abwässer kontinuierlich durch diese Patrone hindurchgeleitet, bis ein am Ausfluß der Patrone angeordneter Sensor anzeigt, daß die zu eliminierenden Substanzen aus dem zu behandelnden Abwasser in zu geringem Ausmaß ausgefiltert werden und deshalb im Ausfluß vorhanden sind, weil die Adsorptionskapazität der Patronenfüllung erschöpft ist. Die Patrone ist nun durch eine neue zu ersetzen.

Durch die Verwendung mehrerer parallel geschalteter Patronen kann nacheinander jeweils wenigstens eine Patrone weiter zum Reinigen verwandt werden, während ein weiterer Kreislauf, z. B. mit Lösungsmittel, die jeweils aus dem ersten Reinigungskreislauf herausgeschalteten anderen Patronen reinigt. Dadurch kann eine Anlage mit kontinuierlichem Durchsatz an zu reinigendem Abwasser konstruiert werden. Der Vorteil hierbei ist insbesondere, daß die Volumina, die zu reinigen sind, erheblich abnehmen. So kann durch eine Patrone ein sehr großes Volumen an zu reinigendem Abwasser geleitet werden, und mit einem um sehr viel geringeren Volumen an Salzsäure kann diese Patrone dann mit der Desorptionsmethode gereinigt werden. Gleiches gilt für organische Lösungsmittel wie z. B. Ethanol, Methanol oder ähnliches.

Die Verwendung dreier Patronen ist insbesondere deshalb vorteilhaft, weil das Reinigen einer Patrone zwei Vorgänge, einmal das Spülen mit der Desorptionslösung und das anschließende Reinigen der Patrone von der Desorptionslösung umfaßt, so daß wenigstens mit drei Anschlüssen verschiedene Flüssigkeiten durch jede Patrone gepumpt werden.

## Patentansprüche

1. Verfahren zur Gewinnung von Adsorptionsmaterial zur Adsorption von Schwermetallen, Kohlenwasserstoffen und anderen Schadstoffen aus Abwässern und dergleichen zur Reinigung dieser, mit einem ersten Verfahrensschritt :
- Zerkleinern von Braunalgen,
gekennzeichnet durch die Schritte
- Herauslösen der Alginate aus der Biomasse,
- Abpressen der Biomasse,
- Zerkleinern der Biomasse auf eine Korngröße von etwa 500 - 1000 µm,
- erstes Spülen der zerkleinerten Biomasse mit Seewasser, und
- zweites Spülen der zerkleinerten Biomasse mit Süßwasser.

2. Verfahren zur Gewinnung von Adsorptionsmaterial nach Anspruch 1, gekennzeichnet durch zweimaliges Spülen mit Seewasser und einmaliges Spülen mit Süßwasser, wobei jeweils die etwa 10-fache Menge Wasser in bezug zur Biomasse verwendet wird.

3. Verfahren zur Gewinnung von Adsorptionsmaterial nach Anspruch 1 oder 2, dadurch gekennzeichnet, daß zur Gewinnung hochreiner Biomasse der Süßwasser-Spülgang mit destilliertem Wasser durchgeführt wird.

4. Verfahren zur Gewinnung von Adsorptionsmaterial nach einem der vorangehenden Ansprüche, gekennzeichnet durch Trocknung der gespülten Biomasse.

5. Verfahren zur Gewinnung von Adsorptionsmaterial nach einem der vorangehenden Ansprüche, gekennzeichnet durch Einbetten der gespülten Biomasse in granulatartige polymere Trägerstoffe.

6. Verfahren zur Gewinnung von Adsorptionsmaterial nach einem der vorangehenden Ansprüche, gekennzeichnet durch
- Suspendieren der gespülten Biomasse in wässriger Lösung von Na-Alginat,
- Eintropfen dieser Suspension in Calciumchlorid-Lösung,
- Trennen der sich ergebenden granulatartigen Ca-Alginat Partikel von der Lösung.

7. Verfahren zur Gewinnung von Adsorptionsmaterial nach Anspruch 6, dadurch gekennzeichnet, daß die gespülte Biomasse zu etwa 5% in etwa 6%-iger wässriger Lösung von Na-Alginat suspendiert wird, und die Suspension in etwa 0,2 molare Calciumchlorid-Lösung eingetropft wird.

8. Verwendung des nach den vorangehenden Ansprüchen gewonnenen Materials zur Adsorption von Schadstoffen aus Abwässern, gekennzeichnet durch die Verfahrensschritte
- Einbringen der gespülten Biomasse, dem Adsorptionsmaterial, in das zu reinigende Abwasser oder dergleichen
- Schütteln dieser Biomasse mit dem zu reinigenden Abwasser oder dergleichen und
- Trennen der Biomasse von den Abwässern.

9. Verfahren zur Wiederverwendung des nach Anspruch 8 verwendeten Materials nach Adsorption von Schadstoffen aus Abwässern, gekennzeichnet durch den weiteren Verfahrensschritt :
- Entfernen der adsorbierten Schwermetalle aus der Biomasse mit einer Desorptionslösung nach dem Trennen der Biomasse von den Abwässern.

10. Patronen gefüllt mit dem nach den Ansprüchen 1 bis 7 gewonnenen Material zum Einsatz in einem der Verfahren zur Adsorption von Schadstoffen aus Abwässern bzw. zur Desorption des Materials nach Anspruch 9, gekennzeichnet durch eine röhrenartige Form, durch die die zu reinigenden Flüssigkeiten bzw. die Desorptionslösungen hindurchgeleitet sind.

## Claims

1. Method for the production of adsorption material for the adsorption of heavy metals, hydrocarbons and other harmful substances from waste waters and similar liquids, the cleansing of these, with the first process step:
- crushing of brown algae,
characterized by the steps of
- extraction of the alginates from the biomass,
- pressing out the biomass,
- grinding of the biomass to a particle size of approximately 500 - 1000 µm,
- first rinsing of the ground biomass with sea water, and
- second rinsing of the ground biomass with fresh water.

2. Method for the production of adsorption material according to claim 1, characterized by rinsing twice with sea water and once with fresh water, wherein in each case the 10-fold amount of water in relation to the biomass is used.

3. Method for the production of adsorption material according to claim 1 or 2, characterized by rinsing with distilled water in order to gain a highly purified biomass.

4. Method for the production of adsorption material according to one of the preceding claims, characterized by drying the rinsed biomass.

5. Method for the production of adsorption material according to one of the preceding claims, characterized by embedding the rinsed biomass in granulated-like polymer carrier substances.

6. Method for the production of adsorption material according to one of the preceding claims, characterized by
- suspending the rinsed biomass in an aqueous solution of Na-alginate,
- instilling this suspension in calcium chloride solution,
- separating the granulate-like Ca-alginate particles which result from this procedure from the solution.

7. Method for the production of adsorption material according to claim 6, characterized in that the rinsed biomass is suspended by about 5 % in an approximately 6 % aqueous solution of Na-alginate, and instilling the suspension in an approximately 0,2 molar calcium chloride solution.

8. Utilization of the adsorption material produced according to one of the proceeding claims for adsorption of harmful substances from waste water, characterized by the method steps
- placing the rinsed biomass, the adsorption material, into the waste water or the like,
- shaking the biomass with the waste water or the like,
- separation of the biomass from the waste waters.

9. Method for refusing of the material used according to claim 8 after adsorption of harmful substances from waste waters, characterized by the further step:
- removing the adsorbed heavy metals from the biomass with a desorption solution after the separation of the biomass from the waste water.

10. Cartridges filled with material produced according to one of the claims 1 to 7 for use in a method for adsorption of harmful substances from waste waters resp. for desorption of the material according to claim 9, characterized by a tube-like form, through which the liquid to be cleansed or the desorption solution is passed.

## Revendications

1. Procédé d'extraction de matériau d'adsorption en vue de l'adsorption de métaux lourds, d'hydrocarbures et d'autres substances nocives en provenance d'eaux usées et similaires, pour le nettoyage de ces dernières, avec une première étape de procédé:
- fragmentation d'algues brunes,
caractérisé par les étapes
- dissolution des alginates en provenance de la biomasse,
- extraction par compression de la biomasse,
- fragmentation de la biomasse à une grosseur de grain d'environ 500 - 1000 microns,
- premier rinçage de la biomasse fragmentée à l'aide d'eau de mer, et
- deuxième rinçage de la biomasse fragmentée à l'aide d'eau douce.

2. Procédé d'extraction de matériau d'adsorption selon la revendication 1, caractérisé par un rinçage à deux reprises à l'aide d'eau de mer, et par un rinçage à une reprise à l'aide d'eau douce, une quantité d'eau environ dix fois plus importante par rapport à la biomasse étant utilisée à chaque fois.

3. Procédé d'extraction de matériau d'adsorption selon la revendication 1 ou 2, caractérisé en ce que la procédure de rinçage à l'aide d'eau douce, en vue de l'extraction de biomasse très pure, est effectuée à l'aide d'eau distillée.

4. Procédé d'extraction de matériau d'adsorption selon l'une quelconque des revendications précédentes, caractérisé par le séchage de la biomasse rincée.

5. Procédé d'extraction de matériau d'adsorption selon l'une quelconque des revendications précédentes, caractérisé par l'incorporation de la biomasse rincée dans des substances-vecteur polymères du genre granulat.

6. Procédé d'extraction de matériau d'adsorption selon l'une quelconque des revendications précédentes, caractérisé par
- une suspension de la biomasse rincée dans une solution aqueuse d'alginate de sodium,
- l'égouttage de cette suspension dans une solution de chlorure de calcium,
- la séparation, de la solution, des particules résultantes d'alginate de Ca sous forme de granulat.

7. Procédé d'extraction de matériau d'adsorption selon la revendication 6, caractérisé en ce que la biomasse rincée est suspendue dans une solution aqueuse d'alginate de Na à raison d'environ 5 % à environ 6 %, et en ce que la suspension s'égoutte dans une solution de chlorure de calcium environ 0,2 molaire.

8. Utilisation du matériau d'adsorption obtenu conformément aux revendications précédentes, en vue de l'adsorption de substances nocives en provenance d'eaux usées, caractérisée par les étapes de procédé
- introduction de la biomasse rincée, du matériau d'adsorption, dans l'eau à nettoyer ou similaire
- agitation de cette biomasse avec l'eau usée ou similaire à nettoyer et
- séparation de la biomasse des eaux usées.

9. Procédé en vue du recyclage du matériau utilisé selon la revendication 8, après adsorption des substances nocives en provenance d'eaux usées, caractérisé par l'étape de procédé supplémentaire:
- élimination des métaux lourds adsorbés de la biomasse à l'aide d'une solution de désorption après la séparation de la biomasse en provenance des eaux usées.

10. Cartouches remplies du matériau extrait conformément aux revendications 1 à 7, en vue de l'utilisation dans un des procédés en vue de l'adsorption de substances nocives en provenance d'eaux usées, respectivement en vue de la désorption du matériau selon la revendication 9, caractérisées par une forme tubulaire, à travers lesquelles les liquides à nettoyer, respectivement les solutions de désorption, sont conduites.
